# EUROPEAN PATENT APPLICATION

(11) **EP 4 579 327 A1**
(43) Date of publication of application: **02.07.2025**
(21) Application number: 23859504.5
(22) Date of filing: 01.09.2023
(51) Int. Cl.: G02F 1/1343, G02F 1/133, G02F 1/1333, G02F 1/1334, G02F 1/13

(54) **LOCAL DIMMING FILM, ELECTRODE MANUFACTURING METHOD AND LASER CUTTING DEVICE**

(30) Priority: 02.09.2022 CN 202211072155
(71) Applicant: Shanghai Longsheng Optronics New Materials Co., Ltd, Shanghai 201806 (CN)
(72) Inventor: WU, Yung-Lung, Shanghai 201806 (CN); SUN, Rui, Shanghai 201806 (CN); ZHU, Ming, Shanghai 201806 (CN)
(74) Representative: Page, White & Farrer Germany LLP
(86) International application number: PCT/CN2023/116587
(87) International publication number: WO 2024/046477

(57) **Abstract**

A local dimming film, an electrode manufacturing method and a laser cutting device. The local dimming film comprises a first conductive layer, a second conductive layer, a liquid crystal layer and electrodes, the liquid crystal layer being arranged between the first conductive layer and the second conductive layer. The electrodes are arranged at preset positions of the local dimming film, and are in contact with at the preset positions both of or one of the first conductive layer and the second conductive layer; and the electrodes are formed by means of silver paste and conductive layers which are not cut off at the preset positions of the local dimming film. Silver paste is cheap and has good conductivity, thus making up defects of large resistance values and weak conduction capacity of conductive layers; and by means of the silver paste and the conductive layers for electric conduction, a voltage can be effectively transmitted at a narrower width to a tail end of each zone of the dimming film. The silver paste and the conductive layers are arranged to form the electrodes, so as to achieve an electric conduction function and conduct an external control device and the interior of the local dimming film, such that electrode wiring of the local dimming film is more concise, thus reducing manufacturing costs of the electrodes.

## Description

### CROSS-REFERENCE TO RELATED APPLICATIONS

The present disclosure claims the priority to the Chinese patent application with the filling No. 202211072155.7 filed with the Chinese Patent Office on September 2, 2022, and entitled "LOCAL DIMMING FILM, ELECTRODE MANUFACTURING METHOD AND LASER CUTTING DEVICE", the contents of which are incorporated herein by reference in entirety.

### TECHNICAL FIELD

The present disclosure relates to the field of optoelectronic devices, and specifically, to a local dimming film, an electrode manufacturing method, and a laser cutting device.

### BACKGROUND ART

With an expansion of application fields of PDLC (Polymer Dispersed Liquid Crystal) dimming film and an increasing familiarity among the public, users have higher demands for pattern display and customized pattern display of the PDLC dimming film. After the PDLC dimming film is partitioned according to patterns, each region has an electrode, and different regions are powered separately. This enables multiple transformation combinations, such as making a pattern region transparent while a non-pattern region remains foggy, making the pattern region foggy while the non-pattern region remains transparent, or making the entire film fully transparent or fully foggy. By setting a control program for the power supply, jumping and switching between different modes and transformations can be achieved.

To make different regions of the local dimming film transparent separately, the electrodes of the local dimming film need to be partitioned to achieve power control over different regions. Currently, common connection methods between an internal portion of the local dimming film and an external control device include: connecting the external control device to the internal portion of the partitioned dimming film by arranging circuit wires, and directly connecting the external control device to the internal portion of the local dimming film through a conductive layer. If connection is made by the circuit wires, when there are many partitions inside the local dimming film, the wiring of the local dimming film becomes complex; and if the connection is made through a conductive layer, due to a relatively high resistance of the conductive layer (generally 100-300Ω, for example, the resistance at both ends of the long edge of a conductive film measuring 2cm*100cm is about 5-10 kΩ, the resistance at both ends of the long edge of a conductive film measuring 1cm*100cm is about 20 kΩ, and the resistance at both ends of the long edge of a conductive film measuring 0.2cm*100cm is about 5-10 MΩ), using a conductive film as a wire cannot transmit voltage to the PDLC film for large PDLC films.

### SUMMARY

The embodiments of the present disclosure provide a local dimming film, an electrode manufacturing method, and a laser cutting device, which can improve electrode conductivity while simplifying wiring.

Some embodiments of the present disclosure provide a local dimming film, and the local dimming film can include: a first conductive layer, a second conductive layer, and multiple independent electrodes bounded by electrode cutting lines, wherein both or one of the first conductive layer and the second conductive layer can be provided with a pattern, and the pattern on the first conductive layer or the second conductive layer can be a region formed by laser etching lines; the multiple independent electrodes can be arranged at preset positions of the local dimming film, and can be respectively connected to different pattern regions of a corresponding conductive layer provided with the pattern at the preset positions of the local dimming film, wherein each laser etching line of the pattern is connected with a corresponding electrode cutting line, wherein the multiple independent electrodes are formed by means of silver paste and conductive layers which are not cut off at the preset positions of the local dimming film.

In the above implementation process, by cutting an electrode into multiple independent electrodes to partition the electrode and form partitioned wiring, which is configured to connect with different regions of the conductive layer provided with the pattern, thereby achieving independent control over different regions of the conductive layer provided with the pattern, and improving the independence of display of multiple patterns of the local dimming film.

In one embodiment, the multiple independent electrodes bounded by the electrode cutting lines can be non-conductive to each other; and each independent electrode is connected to different partitions of the conductive layer provided with the pattern and an external control device.

In the above implementation process, since each independent electrode is electrically isolated from the others, and each independent electrode is respectively connected to different pattern regions and non-pattern regions of the conductive layer provided with the pattern, independent control over each region of the conductive layer provided with the pattern and the corresponding electrode is achieved.

In one embodiment, the local dimming film can further include: a common electrode, wherein the common electrode can be arranged at the preset position of the local dimming film and can be in contact with the first conductive layer or the second conductive layer that is not provided with the pattern; one of the first conductive layer and the second conductive layer can be provided with the pattern, and the different pattern regions of the conductive layer provided with the pattern can be all connected to the electrode of the first conductive layer or the second conductive layer that is not provided with the pattern; or both the first conductive layer and the second conductive layer can be provided with pattern, and the pattern regions of the first conductive layer and the second conductive layer that are the same are connected to each other.

In the above implementation process, different electrode connection methods are arranged according to different configurations of the local dimming film, so that the local dimming film can better meet actual requirements of display, thus improving the accuracy of the display of the local dimming film.

In one embodiment, one end of each of the multiple independent electrodes, which is remote from the different pattern regions of the conductive layer, can all be arranged at a preset edge position of the preset position of the local dimming film.

In the above implementation process, by arranging the power input terminals of multiple independent electrodes at the same position, the external control device only needs to be connected to the multiple independent electrodes at the preset edge position, thus simplifying the circuit connection structure of the local dimming film.

In one embodiment, one end of each of the multiple independent electrodes at the preset edge position of the local dimming film away from the different pattern regions of the conductive layer can be connected to the external control device through an FPC, wherein the multiple independent electrodes can correspond to pressing points of the FPC, so as to press the multiple independent electrodes with the FPC, and the FPC can be snap-connected to the external control device.

In the above implementation process, by pressing multiple electrodes into the FPC separately and connecting to the external control device through the FPC, with the connection method being snap-connection, the connection method between the electrodes and the external control device is simplified.

Some embodiments of the present disclosure further provide an electrode manufacturing method, and the electrode manufacturing method can include: cutting off both or one of the first conductive layer and the second conductive layer at a preset position of the local dimming film; cleaning a liquid crystal layer at the preset position; applying a silver paste onto an uncut conductive layer at the preset position, so as to form an electrode through the silver paste and the uncut conductive layer, wherein the uncut conductive layer is both or one of the first conductive layer and the second conductive layer, and both or one of the first conductive layer and the second conductive layer is provided with a pattern; the pattern of the first conductive layer or the second conductive layer is formed through laser etching, and the pattern on the first conductive layer or the second conductive layer is a region formed by laser etching lines; and the electrode connects an internal portion of the local dimming film to an external control device; and cutting the electrode in contact with the conductive layer provided with the pattern according to the laser etching lines to form multiple independent electrodes bounded by electrode cutting lines, so that different pattern regions of the conductive layer provided with the pattern are respectively connected to corresponding independent electrodes, wherein the electrode cutting lines are connected to the laser etching lines.

In the above implementation process, by dividing the electrode into multiple independent electrodes according to the laser etching lines, further partitioning the electrode according to the pattern of the conductive layer provided with a pattern, so that each independent electrode is connected to the corresponding region, independent control of each region of the conductive layer provided with a pattern and the corresponding electrode is achieved.

In one embodiment, the local dimming film can include an effective display region and an electrode region, wherein the effective display region is a region of the local dimming film configured for display, the electrode region is a region of the local dimming film not configured for display, and the preset position of the local dimming film can be a position where the electrode region is located.

In one embodiment, the step of cutting off both or one of the first conductive layer and the second conductive layer at a preset position of the local dimming film can include: only cutting off a portion of both or one of the first conductive layer and the second conductive layer at the preset position of the local dimming film.

In one embodiment, the local dimming film can further include: a first PET layer and a second PET layer, wherein the first conductive layer is provided on the first PET layer, and the second conductive layer is provided on the second PET layer; and the step of cutting off both or one of the first conductive layer and the second conductive layer at a preset position of the local dimming film can include: cutting off both or one of a portion of the first conductive layer and the second conductive layer at the preset position of the local dimming film through laser; or the step of cutting the electrode in contact with the conductive layer provided with the pattern according to the laser etching lines includes: cutting the electrode in contact with the conductive layer provided with the pattern according to the laser etching lines through laser, wherein the laser does not cut the first PET layer and the second PET layer.

In the above implementation process, through cutting of the electrode and cutting of the conductive layer by laser, wherein the laser does not cut the PET layer during the cutting process, the integrity of the PET layer is ensured, which achieves targeted cutting and improves cutting accuracy.

In one embodiment, one end of each of the multiple independent electrodes away from the different pattern regions of the conductive layer can all be arranged at a preset edge position of the preset position of the dimming film; and after the step of cutting the electrode in contact with the conductive layer provided with the pattern according to the laser etching lines to form multiple independent electrodes bounded by electrode cutting lines, so that the different pattern regions of the conductive layer provided with the pattern are respectively connected to corresponding independent electrodes, the method can further include: making the multiple independent electrodes correspond to the pressing points of the FPC, so that the multiple independent electrodes are pressed with the FPC, and are connected to the external control device through the FPC.

In the above implementation process, by pressing multiple electrodes into the FPC separately and connecting to the external control device through the FPC, with the connection method being snap-connection, the connection method between the electrodes and the external control device is simplified.

Some other embodiments of the present disclosure further provide a laser cutting device, and the laser cutting device can include: a control system, an adjustment system, and laser cutting equipment, wherein the control system is connected to the adjustment system and the laser cutting equipment; the control system can be configured to generate position information of a local dimming film and cutting information of the local dimming film based on information of the local dimming film, send the position information of the local dimming film to the adjustment system, and send the cutting information of the local dimming film to the laser cutting equipment; the adjustment system can be configured to adjust a position of the local dimming film based on the position information of the local dimming film; and the laser cutting equipment can be configured to cut off both or one of the first conductive layer and the second conductive layer at the preset position of the local dimming film and an electrode of the dimming film, based on the cutting information of the local dimming film, wherein the electrode of the local dimming film can be prepared according to the electrode manufacturing methods described in any of the foregoing embodiments.

In one embodiment, a wavelength range of the laser cutting equipment can be 310-500 nm; a frequency range of the laser cutting equipment can be 1-4000 kHz; and an energy range of the laser cutting equipment can be 0.1-3 J/sec.

Some embodiments of the present disclosure provide an electrode manufacturing device, wherein the electrode manufacturing device is configured to prepare electrodes of a local dimming film by means of the electrode manufacturing methods described in any of the foregoing embodiments, wherein the electrode manufacturing device can include:
a cutting module, configured to cut off both or one of the first conductive layer and the second conductive layer at the preset position of the local dimming film;
a cleaning module, configured to clean a liquid crystal layer at the preset position; and
a coating module, configured to apply silver paste onto an uncut conductive layer at the preset position, to form the electrode through the silver paste and the uncut conductive layer.

Some embodiments of the present disclosure further provide an electronic device, which can include: a processor and a memory, wherein the memory stores machine-readable instructions executable by the processor. When the electronic device is in operation, the machine-readable instructions are executed by the processor to perform the steps of the electrode manufacturing method as described in any of the foregoing embodiments.

Some further embodiments of the present disclosure also provide a computer-readable storage medium, wherein the computer-readable storage medium stores a computer program, wherein the computer program, when executed by a processor, is capable of performing the steps of the electrode manufacturing method as described in any of the foregoing embodiments.

To make the above objectives, features, and advantages of the present disclosure more evident and comprehensible, the following embodiments are described in detail with the drawings.

### BRIEF DESCRIPTION OF DRAWINGS

In order to more clearly illustrate the technical solutions of the embodiments of the present disclosure, the following will briefly introduce the drawings used in the embodiments. It should be understood that the following drawings only show some embodiments of the present disclosure, and therefore it should not be regarded as a limitation on the scope. Those ordinary skilled in the art can also obtain other related drawings based on these drawings without inventive effort.
FIG. 1 is a schematic structural diagram of a local dimming film including a first electrode and a second electrode provided in an embodiment of the present disclosure;
FIG. 2 is a schematic structural diagram of a local dimming film including a first electrode provided in an embodiment of the present disclosure;
FIG. 3 is a schematic structural diagram of a local dimming film including a second electrode provided in an embodiment of the present disclosure;
FIG. 4 is a schematic diagram of a section of a conductive layer provided with a pattern and multiple independent electrodes bounded by multiple electrode cutting lines provided in an embodiment of the present disclosure;
FIG. 5 is a flowchart of an electrode manufacturing method provided in an embodiment of the present disclosure;
FIG. 6 is a schematic structural diagram of a local dimming film provided in an embodiment of the present disclosure;
FIG. 7 is a schematic diagram illustrating an interaction between a laser cutting device and a coating device;
FIG. 8 is a laser cutting device provided in an embodiment of the present disclosure; and
FIG. 9 is a functional module schematic diagram of an electrode manufacturing device provided in an embodiment of the present disclosure.

Reference numerals 100 - adjustment system; 101 - Y-shaft motor; 102 - X-shaft sliding module; 103 - X-shaft limit sensor; 104 - Z-shaft sliding module; 105 - negative pressure platform; 106 - Y-shaft sliding module; 107 - Z-shaft sliding table; 108 - X-shaft transmission connector; 109 - X-shaft slide rod; 110 - Y-shaft transmission connecting rod; 200 - control system; 300 - laser cutting equipment; 400 - cantilever; 500 - frame; 600 - cantilever connector; 01 - laser cutting device; 02 - coating device; 301 - cutting module; 302 - cleaning module; 303 - coating module.

### DETAILED DESCRIPTION OF EMBODIMENTS

The technical solutions in the embodiments of the present disclosure will be described below with reference to the drawings in the embodiments of the present disclosure.

It should be noted that similar numerals and letters denote similar terms in the following drawings so that once an item is defined in one drawing, it does not need to be further discussed in subsequent drawings. Additionally, in the description of the present disclosure, the terms "first", "second" and the like are only used for distinguishing descriptions, and cannot be understood as indicating or implying relative importance.

The PDLC dimming film is manufactured by coating a polymer-dispersed liquid crystal layer between two PET-ITO (baseline layer-conductive layer) films, followed by photopolymerization or thermopolymerization to allow polymer aggregation. At this stage, liquid crystals precipitate from the polymer and form micron-sized droplets, which are uniformly dispersed within the polymer network. Under an electric field, the liquid crystals reorient: when the liquid crystal molecules are arranged perpendicular to the film surface, the film becomes transparent; when they are randomly arranged, the film appears frosted. Thus, the transparency and frosted state of the film can be switched by controlling the power supply. Currently, PDLC dimming films are widely used in interior decoration, glass curtain walls, billboards, and automotive glass.

To enable different regions to become transparent separately, electrodes should be fabricated separately for different partitions. Existing electrode fabrication methods include the following. 1. Electrode is manufactured for each partition, with film-to-controller connections made via wire bonding; however, this results in complex wiring and a large difference in thickness between the welding point and the diaphragm, which adversely affects subsequent dimming glass manufacturing. 2. An FPC (flexible printed circuit) is used to connect partition electrodes, which optimizes wiring layout and resolves welding issues; however, this method is expensive. For example, a 1-meter-long FPC with ten partitions costs around 1,000 yuan, sometimes exceeding the cost of the PDLC film itself. 3. The conductive layer is used as a wire to aggregate dispersed electrodes, followed by connection to the controller via wire bonding or FPC; however, this method is only suitable for small-sized films. For example, in a 1-meter-long, 10-partition film, a 2 cm-wide conductive layer as a wire cannot illuminate the distant partitions due to high resistance, which dissipates voltage, making it impossible to transmit the voltage to the film. Moreover, if the width of the conductive layer used as a wire is too large, it will affect the size of the overall film.

In view of this, the inventors of the present disclosure, through long-term research on dimming films, provide a local dimming film, an electrode manufacturing method, and a laser cutting device. This method includes removing one conductive layer at a designated position on the local dimming film, clearing the liquid crystal layer at that position, and applying the silver paste on the uncut conductive layer to form electrodes through the silver paste and the conductive layer. The electrodes are cut and divided into sections, and communicated to different regions of the conductive layer provided with the pattern. There is no need to arrange additional circuits to connect various regions inside the local dimming film with the external control device, which simplifies the circuit structure.

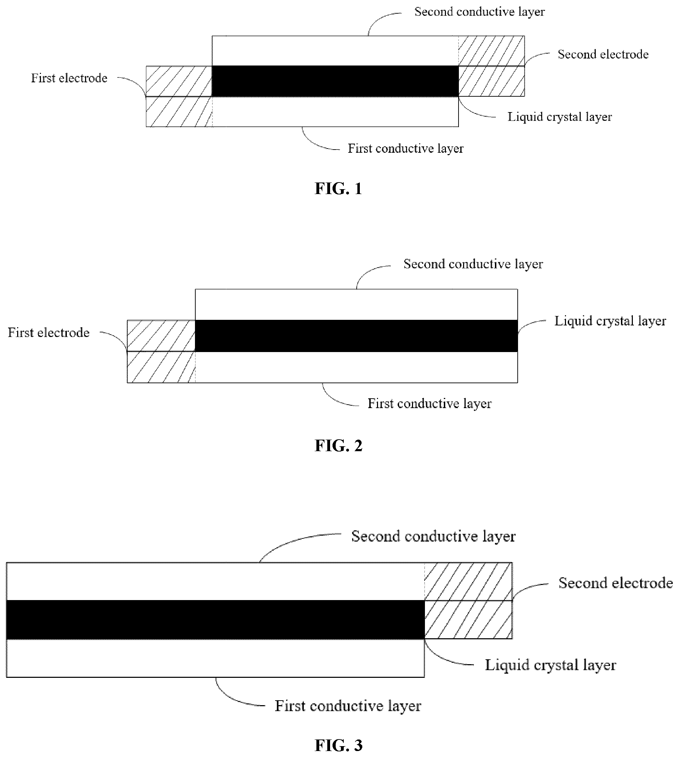

As shown in FIG. 1, FIG. 2, and FIG. 3, the local dimming film can include a first conductive layer, a second conductive layer, a liquid crystal layer, and electrodes. The liquid crystal layer is arranged between the first conductive layer and the second conductive layer. The electrodes are arranged at preset positions of the local dimming film and are in contact with at the preset positions both of or one of the first conductive layer and the second conductive layer.

Herein, the electrodes can be formed by means of silver paste and conductive layers which are not cut off at the preset positions of the local dimming film.

The aforementioned electrode can include multiple independent electrodes and common electrodes.

The preset position of the local dimming film here can be the position of the electrode region at the edge of the local dimming film. It can be understood that the local dimming film can include an effective display region and an electrode region, wherein the effective display region is a region of the local dimming film configured for display, and the electrode region is a region of the local dimming film not configured for display.

It can be understood that one end of the electrode can be connected to the interior of the dimming film, and the other end of the electrode can be connected to an external control device, serving as a connection line between the external control device and the interior of the dimming film.

The local dimming film in the embodiments of the present disclosure can include multiple structures. Below, the structure of the local dimming film in the embodiments of the present disclosure is further demonstrated with specific examples. Exemplarily, as shown in FIG. 1, the electrode can include a first electrode and a second electrode. The first electrode can include a first conductive layer and silver paste applied to the first conductive layer, and the second electrode can include a second conductive layer and silver paste applied to the second conductive layer.

Exemplarily, as shown in FIG. 2, the electrode can only include a first electrode. The first electrode can include a first conductive layer and silver paste applied to the first conductive layer.

As shown in FIG. 3, the electrode can include a second electrode. The second electrode can include a second conductive layer and silver paste applied to the second conductive layer.

In the above implementation process, silver paste is applied to the uncut conductive layer at the preset position of the local dimming film so that the silver paste and the uncut conductive layer form an electrode. Since silver paste has good conductivity, it compensates for the defects of the large resistance value and weak conductivity when the conductive layer alone serves as an electrode, thereby improving the conductivity of the electrode. Additionally, the electrode formed by the conductive layer and silver paste can be directly connected to the interior of the local dimming film and connected to an external control device, thus reducing the connection lines between the interior of the local dimming film and the external control device, simplifying the electrode wiring of the local dimming film.

In a possible implementation, the local dimming film can also include multiple independent electrodes, with the electrode cutting line serving as a boundary.

Herein, one or both of the first conductive layer and the second conductive layer can be provided with a pattern, and the pattern on the first conductive layer or the second conductive layer can be a region formed by laser etching lines. The electrode in contact with the conductive layer provided with a pattern can include multiple independent electrodes with the electrode cutting line serving as a boundary. Different pattern regions of the conductive layer provided with a pattern can be connected to corresponding independent electrodes, respectively.

wherein, each laser etching line of the pattern can be in contact with the corresponding electrode cutting line. The multiple independent electrodes, with the electrode cutting line serving as a boundary, can be formed through the silver paste and the uncut conductive layer at the preset position of the local dimming film.

The pattern here can be a regular pattern such as a circular pattern or a square pattern, or it can include irregular patterns such as figures, plants, and animals. One or more patterns can be included on the first conductive layer or the second conductive layer. The pattern can be laser-etched through a laser etching device to form a region with the laser etching line serving as a boundary on the first conductive layer or the second conductive layer.

It can be understood that the electrode can be cut through a laser cutting device to form multiple independent electrodes, with the electrode cutting line serving as a boundary. The multiple independent electrodes, with the electrode cutting line serving as a boundary, are respectively connected to different regions of the conductive layer provided with a pattern.

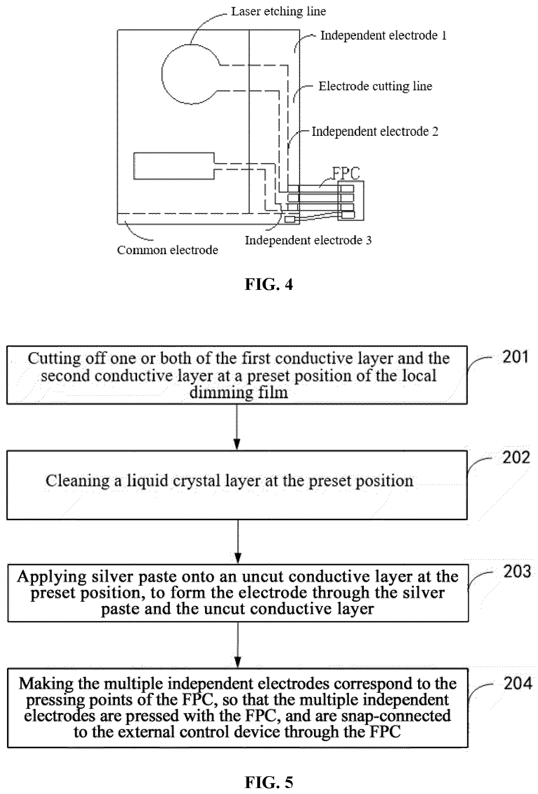

The pattern on the first conductive layer or the second conductive layer can be a non-closed pattern. As shown in FIG. 4, FIG. 4 is a schematic diagram of a section of a conductive layer provided with a pattern and multiple independent electrodes bounded by electrode cutting lines provided in an embodiment of the present disclosure. As shown in the figure, the conductive layer provided with the pattern can include a circular pattern and a square pattern. The circular pattern is in communication with independent electrode 2, the square pattern is in communication with independent electrode 3, and other regions outside the patterns are in communication with independent electrode 1. Moreover, the electrode cutting line of the circular pattern (the solid boundary of the circular pattern in FIG. 4) is connected to the laser etching line of independent electrode 2 (the dashed boundary of independent electrode 2 in FIG. 4), and the electrode cutting line of the square pattern (the solid boundary of the square pattern in FIG. 4) is connected to the laser etching line of independent electrode 3 (the dashed boundary of independent electrode 3 in FIG. 4).

In the above implementation process, an electrode is cut into multiple independent electrodes to partition the electrode and form partitioned wiring, which is configured to connect with different regions of the conductive layer provided with the pattern, thereby achieving independent control over different regions of the conductive layer provided with the pattern and improving the independence of multiple pattern displays of the local dimming film.

In a possible implementation, the multiple independent electrodes defined by electrode cutting lines can be electrically isolated from each other; each independent electrode can be respectively connected to different partitions of the conductive layer provided with the pattern and an external control device.

It can be understood that the electrode cutting line can be formed by cutting the electrode using laser cutting equipment, meaning that after the laser cutting equipment cuts the electrode, an electrode cutting line is formed at the cutting location of the electrode, and the conductive layer and silver paste on both sides of the electrode cutting line are cut apart, thereby forming two electrically isolated electrodes.

The number of independent electrodes here can be related to the number of regions in the conductive layer provided with the pattern. If the conductive layer provided with the patterns includes five regions, the number of independent electrodes is also five. If the conductive layer provided with the patterns includes three regions, the number of independent electrodes is also three. This means that the number of independent electrodes can be correspondingly set according to the number of regions in the conductive layer provided with the pattern.

In the above implementation process, since each independent electrode is electrically isolated from the others, and each independent electrode is respectively connected to different pattern regions and non-pattern regions of the conductive layer provided with the pattern, independent control over each region of the conductive layer provided with the pattern and the corresponding electrode is achieved.

In a possible implementation, as shown in FIG. 4, the local dimming film can further include: a common electrode, wherein the common electrode can be arranged at the preset position of the local dimming film and can be in contact with the first conductive layer or the second conductive layer that is not provided with a pattern.

Herein, one of the first conductive layer and the second conductive layer can be provided with a pattern, and different pattern regions of the conductive layer provided with the pattern can be connected to the electrode of the first conductive layer or the second conductive layer that is not provided with a pattern; or both the first conductive layer and the second conductive layer can be provided with patterns, and the pattern of the first conductive layer is connected to the region of the second conductive layer having the same pattern.

When one of the first conductive layer and the second conductive layer is provided with a pattern, the electrode that is not provided with the pattern can serve as the common electrode of the electrode in the conductive layer provided with the pattern. Multiple independent electrodes in the conductive layer provided with the pattern are all connected to the common electrode in the conductive layer that is not provided with the pattern.

When both the first conductive layer and the second conductive layer are provided with patterns, no common electrode exists in the local dimming film, and the pattern of the first conductive layer is connected to the region of the second conductive layer having the same pattern.

In the above implementation process, different electrode connection methods are arranged according to different configurations of the local dimming film, so that the local dimming film can better meet actual display requirements, thus improving the accuracy of the display of the local dimming film.

In a possible implementation, one end of the multiple independent electrodes, which is remote from the different pattern regions of the conductive layer, can all be arranged at a preset edge position of the preset position of the local dimming film.

Optionally, the preset position of the local dimming film can be at the electrode position, and the preset edge position can be at the lower right corner of the electrode or the upper right corner of the electrode. Of course, other positions can also be used, and the preset edge position can be adjusted according to actual conditions, which is not specifically limited in the present disclosure.

Exemplarily, as shown in FIG. 4, one end of independent electrode 1, independent electrode 2, and independent electrode 3, which is remote from the different pattern regions of the conductive layer, can all be arranged at the lower right corner of the local dimming film.

In the above implementation process, by arranging the power input terminals of multiple independent electrodes at the same position, the external control device only needs to connect to the multiple independent electrodes at the preset edge position, thus simplifying the circuit connection structure of the local dimming film. In a possible implementation, one end of the multiple independent electrodes at the preset edge position, which is remote from the different pattern regions of the conductive layer, can be connected to the external control device through an FPC (flexible printed circuit), wherein multiple independent electrodes correspond to the compression bonding points of the FPC to achieve bonding between the multiple independent electrodes and the FPC, and the FPC is snap-connected to the external control device.

The multiple independent electrodes here can be multiple independent electrodes obtained by cutting a single electrode, or they can be multiple independent electrodes obtained by cutting two different electrodes. Each independent electrode is respectively bonded with one FPC. If a common electrode is arranged in the local dimming film, the common electrode of the local dimming film is bonded with one FPC.

It can be understood that after bonding the independent electrodes and the common electrode onto the FPC, when the electrodes in the local dimming film need to be connected to an external control device, they can be connected to the external control device via the FPC. The FPC is snap-connected to the external control device.

In the above implementation process, by bonding one end of multiple electrodes, which is remote from the different pattern regions of the conductive layer, onto the FPC separately, and connecting to the external control device through the FPC, where the connection method is snap-connection, the connection method between the electrodes and the external control device is simplified.

Referring to FIG. 5, FIG. 5 is a flowchart of an electrode manufacturing method provided in an embodiment of the present disclosure. The specific process shown in FIG. 5 will be described in detail below.

Step 201: cutting off one or both of the first conductive layer and the second conductive layer at a preset position of the local dimming film.

The preset position here can be the position of the electrode region at the edge of the local dimming film. It can be understood that the local dimming film can include an effective display region and an electrode region, wherein the effective display region is a region of the local dimming film configured for display, and the electrode region is a region of the local dimming film not configured for display.

The preset position can include two preset positions. That is, the preset position can be the leftmost electrode region of the local dimming film and the rightmost electrode region of the local dimming film. When cutting one or both of the first conductive layer and the second conductive layer at one preset position, only one conductive layer of the local dimming film is cut. Exemplarily, as shown in FIG. 1, if the preset position is the leftmost and rightmost electrode regions of the local dimming film, the second conductive layer at the leftmost position and the first conductive layer at the rightmost position are cut. Exemplarily, as shown in FIG. 2, if the preset position is the leftmost electrode region of the local dimming film, the second conductive layer at the leftmost position is cut. As shown in FIG. 3, if the preset position is the rightmost electrode region of the local dimming film, the first conductive layer at the rightmost position is cut.

One or both of the first conductive layer and the second conductive layer at the preset position of the local dimming film can be partially cut, meaning that only a portion of one or both of the first conductive layer and the second conductive layer at the preset position of the local dimming film is cut. For example, half of the first conductive layer and the second conductive layer can be cut, one-third of the first conductive layer and the second conductive layer can be cut, or one-fourth of the first conductive layer and the second conductive layer can be cut. The cut portions of the first conductive layer and the second conductive layer can be adjusted according to actual conditions, and the present disclosure does not impose specific limitations.

Step 202: cleaning a liquid crystal layer at the preset position.

After cutting one or both of the first conductive layer and the second conductive layer at the preset position of the local dimming film, the liquid crystal layer at the cut portion is exposed. After cleaning the exposed liquid crystal layer, the uncut portion of the conductive layer is subsequently exposed.

Step 203: applying silver paste onto the uncut conductive layer at the preset position so that the silver paste and the uncut conductive layer form an electrode.

Herein, the uncut conductive layer is one or both of the first conductive layer and the second conductive layer.

Exemplarily, as shown in FIG. 1, if the uncut conductive layer is the first conductive layer at the leftmost position and the second conductive layer at the rightmost position, silver paste is applied on the first conductive layer at the leftmost position and the second conductive layer at the rightmost position of the local dimming film, respectively, so that electrodes are formed at the leftmost and rightmost positions of the local dimming film. As shown in FIG. 2, if the uncut conductive layer is the first conductive layer at the leftmost position, silver paste is only applied on the first conductive layer at the leftmost position, so that the electrode is formed at the leftmost position of the local dimming film. As shown in FIG. 3, if the uncut conductive layer is the second conductive layer at the rightmost position, silver paste is only applied on the second conductive layer at the rightmost position of the local dimming film, so that the electrode is formed at the rightmost position of the local dimming film.

In some embodiments, one or both of the first conductive layer and the second conductive layer can be provided with a pattern, wherein the pattern of the first conductive layer or the second conductive layer is formed through laser etching, and the pattern on the first conductive layer or the second conductive layer is a region formed by laser etching lines. The electrode connects an internal portion of the local dimming film to an external control device.

Step 204: cutting the electrode in contact with the conductive layer provided with a pattern according to the laser etching lines to form multiple independent electrodes defined by electrode cutting lines, so that different pattern regions of the conductive layer provided with a pattern are respectively connected to corresponding independent electrodes.

Herein, the electrode cutting lines are connected to the laser etching lines.

It can be understood that the positions of the two ends of the electrode cutting line of each independent electrode can be fixed position points. For example, if a lead-out position point of the local dimming film is the lower right corner of the local dimming film, the starting point of the electrode cutting line is the opening of the laser etching line of the pattern, and the endpoint of the electrode cutting line is the lower right corner of the local dimming film. During electrode cutting, the cutting path of the electrode cutting line is determined based on the starting position, endpoint, and cutting path of the electrode cutting line, and the electrode cutting line is cut accordingly.

In the above implementation process, by dividing the electrode into multiple independent electrodes according to the laser etching lines, further partitioning the electrode according to the pattern of the conductive layer provided with a pattern, and ensuring that each independent electrode is connected to the corresponding region, independent control of each region of the conductive layer provided with a pattern and the corresponding electrode is achieved.

It can be understood that the order of the steps described above for the electrode manufacturing method does not imply an execution order of these steps. In other words, those skilled in the art may perform the above steps in a different order from the order described above regarding the steps of the electrode manufacturing method without departing from the spirit and scope of the present disclosure.

For example, in some embodiments, after the uncut portion of the conductive layer is exposed in step 202, step S204 can be performed first, followed by step S203. In other words, in some embodiments, after exposing the uncut portion of the conductive layer, a pattern can first be formed on the corresponding conductive layer according to the laser etching line, and then the uncut portion of the conductive layer can be cut along the electrode cutting line connected to the laser etching line to form multiple independent cutting regions defined by the electrode cutting lines. This ensures that different pattern regions of the conductive layer provided with a pattern are respectively connected to corresponding cutting regions. Subsequently, a silver paste can be applied separately to the multiple cutting regions of the uncut portion of the conductive layer, thereby forming electrodes through the silver paste and the uncut conductive layer. In this manner, laser etching is no longer required after applying silver adhesive. In some embodiments, applying silver paste separately to the multiple cutting regions of the uncut portion of the conductive layer can include: printing silver paste separately onto each cutting region using screen printing.

It can be understood that, in some embodiments, the step of forming a pattern on the corresponding conductive layer according to the laser etching line and the step of cutting the uncut portion of the conductive layer along the electrode cutting line can be executed in a single process. In other words, the pattern and the cutting region can be simultaneously formed on the corresponding conductive layer in the same process. In this manner, the production efficiency of the local dimming film is significantly improved.

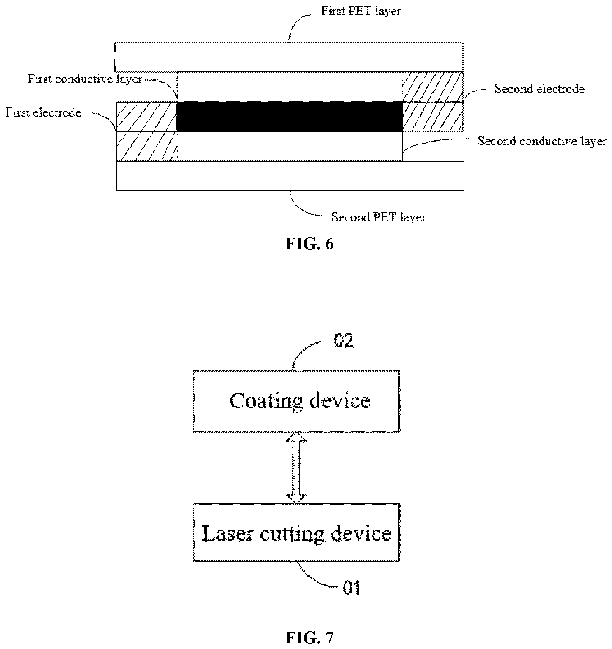

In some embodiments, as shown in FIG. 6, the local dimming film can further include: a first PET layer and a second PET layer, wherein the first conductive layer is provided on the first PET layer, and the second conductive layer is provided on the second PET layer.

In a possible implementation, step 201 can include: cutting off one or both of the first conductive layer and the second conductive layer at a preset position of the dimming film by laser; or the step of cutting the electrode in contact with the conductive layer provided with a pattern according to the laser etching lines includes: cutting the electrode in contact with the conductive layer provided with a pattern according to the laser etching lines through laser.

Herein, the laser does not cut the first PET layer and the second PET layer.

The laser mentioned here is generated by laser cutting equipment, and the laser cutting equipment is provided with a laser cutting device. By setting the working parameters of the laser cutting equipment, the laser energy output by the laser cutting equipment can be controlled, thereby controlling the laser to cut the conductive layer of the local dimming film.

In the above implementation process, the cutting of the electrode and the cutting of the conductive layer are performed using a laser, and the laser does not cut the PET layer during the cutting process, thus ensuring the integrity of the PET layer. This achieves targeted cutting and improves cutting accuracy.

In a possible implementation, after step 204, the method can further include: aligning the multiple independent electrodes with the compression bonding points of the FPC, bonding the multiple independent electrodes with the FPC, and connecting the FPC to the external control device via a snap-connection.

In the above implementation process, by bonding multiple electrodes with the FPC separately and connecting to the external control device through the FPC, with the connection method being snap-connection, the connection method between the electrodes and the external control device is simplified.

To facilitate the understanding of the present embodiment, the following provides a detailed description of the operating environment for executing the electrode manufacturing method disclosed in the present disclosure.

As shown in FIG. 7, FIG. 7 is a schematic diagram illustrating an interaction between the laser cutting device 01 and the coating device 02 provided in the embodiment of the present disclosure. The laser cutting device 01 can be communicatively connected to one or more coating devices 02 via a network for data communication or interaction.

It can be understood that the laser cutting device 01 and the coating device 02 can be the same device or two different devices. The configuration of the laser cutting device 01 and the coating device 02 can be adjusted based on actual conditions, and the present disclosure does not impose specific limitations.

The coating device 02 can include an electrode layer removal apparatus, an electrode layer coating apparatus, and a device body. The electrode layer removal apparatus and the electrode layer coating apparatus are both provided on the device body. The electrode layer removal apparatus is used to remove the liquid crystal layer at a preset position. The electrode layer coating apparatus is configured to apply the silver paste onto the uncut conductive layer at a preset position.

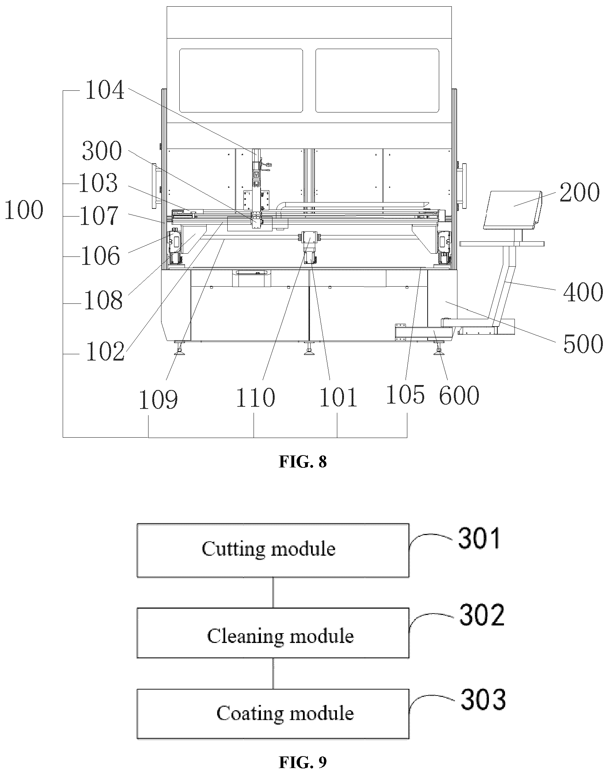

As shown in FIG. 8, FIG. 8 is a laser cutting device provided in an embodiment of the present disclosure. The laser cutting device 01 can include: a control system 200, an adjustment system 100, and laser cutting equipment 300.

Herein, the control system 200 is connected to the adjustment system 100 and the laser cutting equipment 300. The control system 200 can be configured to generate position information of the local dimming film and cutting information of the local dimming film based on information of the local dimming film, send the position information of the local dimming film to the adjustment system 100, and send the cutting information of the local dimming film to the laser cutting equipment 300. The adjustment system 100 can be configured to adjust the position of the local dimming film based on the position information of the local dimming film. The laser cutting equipment 300 can be configured to cut off one or both of the first conductive layer and the second conductive layer at the preset position of the local dimming film, and the electrode of the dimming film, based on the cutting information of the local dimming film.

The electrode of the local dimming film here can be prepared according to the electrode manufacturing methods described above.

The adjustment system 100 can include a negative pressure platform 105, a Y-shaft sliding module 106, a Y-shaft transmission connecting rod 110, a Y-shaft motor 101, an X-shaft sliding module 102, an X-shaft transmission connector 108, an X-shaft slide rod 109, an X-shaft limit sensor 103, a Z-shaft sliding module 104, and a Z-shaft sliding table 107.

Herein, the left and right ends of the negative pressure platform 105 can each be provided with a Z-shaft sliding table 107. A Y-shaft sliding module 106 can be provided on the Z-shaft sliding table 107, and one side of the Y-shaft sliding module 106 can be fixedly mounted with an X-shaft transmission connector 108. An X-shaft slide rod 109 can be provided in the inner side of the X-shaft transmission connector 108, and the outer surface of the X-shaft slide rod 109 can be provided with a Y-shaft transmission connecting rod 110, with the bottom of the Y-shaft transmission connecting rod 110 fixedly mounted with a Y-shaft motor 101.

The Z-shaft sliding table 107 can be provided with an X-shaft sliding module 102, and the bottom of the X-shaft sliding module 102 can be fixed to the top of the X-shaft transmission connector 108 via bolts. The X-shaft sliding module 102 can be provided with an X-shaft limit sensor 103, and a Z-shaft sliding module 104 is arranged over the X-shaft sliding module 102. The Z-shaft sliding module 104 can be provided with laser cutting equipment 300.

The negative pressure platform 105 here can be configured to support the local dimming film, thereby enhancing support during the cutting process of the local dimming film. The X-shaft sliding module 102 and the X-shaft transmission connector 108 can be configured to adjust the position of the laser cutting equipment 300 along the X-shaft. The X-shaft limit sensor 103 can be configured to restrict the position of the laser cutting equipment 300 in the X-shaft direction, thus ensuring that the laser cutting equipment 300 can cut the dimming film at the preset position on the X-shaft. The Y-shaft sliding module 106 and the Y-shaft transmission connecting rod 110 can be configured to adjust the position of the laser cutting equipment 300 along the X-shaft. The Y-shaft motor 101 can be configured to provide power for the adjustment system 100, thus enabling the operation of various components within the adjustment system 100. The Z-shaft sliding module 104 and the Z-shaft sliding table 107 can be configured to adjust the position of the laser cutting equipment 300 along the Z-shaft. By using the X-shaft sliding module 102, the X-shaft transmission connector 108, the Y-shaft sliding module 106, the Y-shaft transmission connecting rod 110, the Z-shaft sliding module 104, and the Z-shaft sliding table 107, the position of the laser cutting equipment 300 can be adjusted, thereby enabling the laser cutting equipment 300 to cut the local dimming film at a set position.

In some implementations, the laser cutting device 01 can further include a frame 500, a cantilever 400, and a cantilever connector 600.

Herein, the control system 200 is connected to the cantilever 400, the cantilever 400 is connected to the cantilever connector 600, and the cantilever connector 600 is fixed to the frame 500 via bolts.

It can be understood that the control system 200 is configured to obtain the position of the local dimming film to be cut and determine the positional information of the position to which the laser cutting equipment 300 needs to be adjusted according to the position of the local dimming film to be cut, so as to control the adjustment system 100 to adjust the position of the laser cutting equipment 300 according to the positional information. The control system 200 can also be configured to control the cutting data for the laser cutting equipment 300, such as the wavelength range, frequency range, power range, and cutting speed during the cutting process of the laser cutting equipment 300.

In a possible implementation, a wavelength range of the laser cutting equipment 300 can be 310-500 nm; a frequency range of the laser cutting equipment 300 can be 1-4000 kHz; and an energy range of the laser cutting equipment 300 can be 0.1-3 J/sec.

Exemplarily, the wavelength of the laser cutting equipment 300 can be 310 nm, 350 nm, 400 nm, 450 nm, or 500 nm. The frequency of the laser cutting equipment 300 can be 1 kHz, 500 kHz, 1000 kHz, 1500 kHz, 2000 kHz, 2500 kHz, 3000 kHz, 3500 kHz, or 4000 kHz. The energy of the laser cutting equipment 300 can be 0.1 J/sec, 0.5 J/sec, 1 J/sec, 1.5 J/sec, 2 J/sec, 2.5 J/sec, or 3 J/sec.

Based on the same inventive concept, the present disclosure further provides an electrode manufacturing device corresponding to the electrode manufacturing method. Since the problem-solving principle of the device in the embodiment of the present disclosure is similar to that of the electrode fabrication method described earlier, the implementation of the device in this embodiment may refer to the descriptions in the embodiments of the above method, and repeated details will not be elaborated.

Referring to FIG. 9, FIG. 9 is a functional module schematic diagram of an electrode manufacturing device provided in an embodiment of the present disclosure. Each module in the electrode manufacturing device of the present embodiment can be configured to execute the steps in the above-described method embodiments. The electrode manufacturing system can include a cutting module 301, a cleaning module 302, and a coating module 303, wherein

the cutting module 301 can be configured to cut off one or both of the first conductive layer and the second conductive layer at a preset position of the local dimming film;

the cleaning module 302 can be configured to clean a liquid crystal layer at the preset position; and

the coating module 303 can be configured to applying silver paste onto an uncut conductive layer at the preset position to form an electrode through the silver paste and the uncut conductive layer.

In a possible embodiment, the cutting module 301 can also be configured for: cutting the electrode in contact with the conductive layer provided with a pattern according to the laser etching lines to form multiple independent electrodes defined by electrode cutting lines, so that different pattern regions of the conductive layer provided with a pattern are respectively connected to corresponding independent electrodes, wherein the electrode cutting lines are connected to the laser etching lines.

The embodiments of the present disclosure further provide a computer-readable storage medium, wherein a computer program is stored on the computer-readable storage medium, and the computer program, when executed by a processor, performs the steps in the electrode manufacturing method described in the method embodiment.

The computer program product of the electrode manufacturing method provided by the embodiment of the present disclosure can include a computer-readable storage medium on which program code is stored. The program code includes instructions that can be used to perform the steps in the electrode manufacturing method described in the previous method embodiment. They can be specifically referred to in the method embodiments above and are not repeated herein.

In the several embodiments provided in the present disclosure, it should be understood that the devices and methods disclosed can be implemented in other ways. The embodiments of the device described above are merely illustrative. For example, the flowcharts and diagrams in the drawings illustrate possible implementations, architectures, functions, and operations of devices, methods, and computer program products according to multiple embodiments of the present disclosure. At this point, each box in the flowchart or diagram can represent a module, program segment, or part of the code. Each part of the module, program segment, or code includes one or more executable instructions for implementing the specified logical functions. It should also be noted that in some alternative implementations, the functions indicated in the boxes may occur in a different order than those indicated in the drawings. For example, two consecutive boxes can actually be executed in parallel, and sometimes they can also be executed in reverse order, depending on the functionality involved. It should also be noted that each box in the block diagram and/or flowchart, and the combination of boxes in the block diagram and/or flowchart, can be implemented by specialized hardware systems designed to perform the specified functions or actions, or by a combination of specialized hardware and computer instructions.

Further, each functional module in each embodiment of the present disclosure can be integrated together to form a separate part, or each module may exist separately, or two or more modules may be integrated to form a separate part.

The functionality, when implemented as a software functional module and sold or used as a stand-alone product, can be stored in a computer-readable storage medium. Based on this understanding, the technical solution of the present disclosure, or the part that contributes to the related art or the part of the technical solution, can be embodied in the form of a software product. The computer software product is stored in a storage medium and includes several instructions that cause a computer device (which can be a personal computer, server, or network device, etc.) to execute all or part of the steps of the methods described in the various embodiments of the present disclosure. The aforementioned storage media include various media that can store program code, such as USB drives, external hard drives, read-only memory (ROM), random access memory (RAM), disks, or optical discs. It is important to note that, in the context, relationship terms such as first and second are used only to distinguish one entity or operation from another entity or operation, without necessarily requiring or implying any such actual relationship or order between those entities or operations. Furthermore, the terms "comprise", "include", or any other variations are intended to encompass non-exclusive inclusion. This allows a process, method, item, or device that includes a series of elements to not only include those elements but also include other elements that are not explicitly listed, or elements that are inherent to the process, method, item, or device. In the absence of further limitations, the inclusion of an element specified by the phrase "comprising" does not exclude the presence of additional identical elements in the process, method, article, or apparatus that includes the specified element.

The above is only a preferred embodiment of the present disclosure, which is not intended to limit, and the present disclosure may have various changes and variations for those skilled in the art. Any modification, equivalent substitution, improvement, etc. made within the spirit and principles of the present disclosure shall be included in the scope of protection of the present disclosure. It should be noted that similar numerals and letters denote similar terms in the following drawings so that once an item is defined in one drawing, it does not need to be further discussed in subsequent drawings.

The above are just specific embodiments of the present disclosure, but the scope of protection of the present disclosure is not limited to the embodiments. Any variations or substitutions, readily apparent to those skilled in the art within the technical scope disclosed in the present disclosure, should be encompassed within the scope of protection of the present disclosure. Therefore, the scope of protection of the present disclosure shall be stated to be subject to the scope of protection of the claims.

### INDUSTRIAL PRACTICALITY

The present disclosure provides a local dimming film, an electrode manufacturing method, and a laser cutting device. The local dimming film in the present disclosure includes: a first conductive layer, a second conductive layer, a liquid crystal layer, and electrodes, wherein the liquid crystal layer is arranged between the first conductive layer and the second conductive layer. The electrodes are arranged at preset positions of the local dimming film, and are in contact with at the preset positions both of or one of the first conductive layer and the second conductive layer, and the electrodes are formed by means of silver paste and conductive layers which are not cut off at the preset positions of the local dimming film. Silver paste is cheap and has good conductivity, thus making up defects of large resistance values and weak conduction capacity of conductive layers; and by means of the silver paste and the conductive layers for electric conduction, a voltage can be effectively transmitted at a narrower width to a tail end of each zone of the dimming film. In the present disclosure, the silver paste and the conductive layers are arranged to form the electrodes, so as to achieve an electric conduction function and conduct an external control device and the interior of the local dimming film, such that electrode wiring of the local dimming film is more concise, thus reducing manufacturing costs of the electrodes.

In addition, it is understood that the local dimming film, electrode manufacturing method, and laser cutting device disclosed in the present disclosure are reproducible and can be used in a variety of industrial applications. For example, the local dimming film, the electrode manufacturing method, and the laser cutting device disclosed in the present disclosure can be used in the field of optoelectronic devices.

## Claims

1. A local dimming film, comprising: a first conductive layer, a second conductive layer, and multiple independent electrodes bounded by electrode cutting lines, wherein both or one of the first conductive layer and the second conductive layer is provided with a pattern, and the pattern on the first conductive layer or the second conductive layer is a region formed by laser etching lines, and
the multiple independent electrodes are arranged at preset positions of the local dimming film, and are respectively connected to different pattern regions of a corresponding conductive layer provided with the pattern at the preset positions of the local dimming film, wherein each laser etching line of the pattern is connected with a corresponding electrode cutting line, wherein
the multiple independent electrodes are formed by a silver paste and conductive layers which are not cut off at the preset positions of the local dimming film.

2. The local dimming film according to claim 1, wherein the multiple independent electrodes bounded by the electrode cutting lines are non-conductive to each other; and
each independent electrode is connected to different partitions of the conductive layer provided with the pattern and an external control device.

3. The local dimming film according to claim 1 or 2, further comprising: a common electrode,
wherein the common electrode is arranged at the preset position of the local dimming film, and is in contact with the first conductive layer or the second conductive layer that is not provided with the pattern;
one of the first conductive layer and the second conductive layer is provided with the pattern, and the different pattern regions of the conductive layer provided with the pattern are all connected to the common electrode of the first conductive layer or the second conductive layer that is not provided with the pattern; or
both the first conductive layer and the second conductive layer are provided with the pattern, and the pattern regions of the first conductive layer and the second conductive layer that are the same are connected to each other.

4. The local dimming film according to any one of claims 1 to 3, wherein one end of each of the multiple independent electrodes away from the different pattern regions of the conductive layer is arranged at a preset edge position of the preset position of the local dimming film.

5. The local dimming film according to claim 4, wherein one end of each of the multiple independent electrodes at the preset edge position of the local dimming film away from the different pattern regions of the conductive layer is connected to the external control device through an FPC, wherein the multiple independent electrodes correspond to pressing points of the FPC, so as to press the multiple independent electrodes with the FPC, and
the FPC is snap-connected to the external control device.

6. An electrode manufacturing method, comprising steps of:
cutting off both or one of the first conductive layer and the second conductive layer at a preset position of the local dimming film;
cleaning a liquid crystal layer at the preset position;
applying a silver paste onto an uncut conductive layer at the preset position, so as to form an electrode through the silver paste and the uncut conductive layer, wherein the uncut conductive layer is both or one of the first conductive layer and the second conductive layer, and both or one of the first conductive layer and the second conductive layer is provided with a pattern; the pattern of the first conductive layer or the second conductive layer is formed through laser etching, and the pattern on the first conductive layer or the second conductive layer is a region formed by laser etching lines; and the electrode connects an internal portion of the local dimming film to an external control device; and
cutting the electrode in contact with the conductive layer provided with the pattern according to the laser etching lines to form multiple independent electrodes bounded by electrode cutting lines, so that different pattern regions of the conductive layer provided with the pattern are respectively connected to corresponding independent electrodes, wherein the electrode cutting lines are connected to the laser etching lines.

7. The electrode manufacturing method according to claim 6, wherein the local dimming film comprises an effective display region and an electrode region, wherein the effective display region is a region of the local dimming film configured for display, the electrode region is a region of the local dimming film not configured for display, and the preset position of the local dimming film is a position where the electrode region is located.

8. The electrode manufacturing method according to claim 6 or 7, wherein the step of cutting off both or one of the first conductive layer and the second conductive layer at a preset position of the local dimming film comprises: only cutting off a portion of both or one of the first conductive layer and the second conductive layer at the preset position of the local dimming film.

9. The electrode manufacturing method according to any one of claims 6 to 8, wherein the local dimming film further comprises: a first PET layer and a second PET layer, wherein the first conductive layer is provided on the first PET layer, and the second conductive layer is provided on the second PET layer; and
the step of cutting off both or one of the first conductive layer and the second conductive layer at a preset position of the local dimming film comprises: cutting off both or one of the first conductive layer and the second conductive layer at the preset position of the local dimming film through laser; or
the step of cutting the electrode in contact with the conductive layer provided with the pattern according to the laser etching lines comprises: cutting the electrode in contact with the conductive layer provided with the pattern according to the laser etching lines through laser,
wherein the laser does not cut the first PET layer and the second PET layer.

10. The electrode manufacturing method according to claim 9, wherein one end of each of the multiple independent electrodes away from the different pattern regions of the conductive layer is arranged at a preset edge position of the preset position of the local dimming film; and after the step of cutting the electrode in contact with the conductive layer provided with the pattern according to the laser etching lines to form multiple independent electrodes bounded by electrode cutting lines, so that the different pattern regions of the conductive layer provided with the pattern are respectively connected to corresponding independent electrodes, the method further comprises:
making the multiple independent electrodes correspond to the pressing points of the FPC, so that the multiple independent electrodes are pressed with the FPC, and are snap-connected to the external control device through the FPC.

11. A laser cutting device, comprising: a control system, an adjustment system, and laser cutting equipment,
wherein the control system is connected to the adjustment system and the laser cutting equipment;
the control system is configured to generate position information of a local dimming film and cutting information of the local dimming film based on information of the local dimming film, send the position information of the local dimming film to the adjustment system, and send the cutting information of the local dimming film to the laser cutting equipment;
the adjustment system is configured to adjust a position of the local dimming film based on the position information of the local dimming film; and
the laser cutting equipment is configured to cut off both or one of the first conductive layer and the second conductive layer at the preset position of the local dimming film and an electrode of the dimming film, based on the cutting information of the local dimming film,
wherein the electrode of the local dimming film is prepared according to the electrode manufacturing methods according to any one of claims 6 to 10.

12. The laser cutting device according to claim 11, wherein a wavelength range of the laser cutting equipment is 310-500 nm; a frequency range of the laser cutting equipment is 1-4000 kHz; and an energy range of the laser cutting equipment is 0.1-3 J/sec.

13. An electrode manufacturing device, configured to prepare an electrode of a local dimming film by means of the electrode manufacturing method according to any one of claims 6 to 10, wherein the electrode manufacturing device comprises:
a cutting module, configured to cut off both or one of the first conductive layer and the second conductive layer at the preset position of the local dimming film;
a cleaning module, configured to clean a liquid crystal layer at the preset position; and
a coating module, configured to applying silver paste onto an uncut conductive layer at the preset position, to form the electrode through the silver paste and the uncut conductive layer.

14. An electronic device, comprising: a processor and a memory, wherein the memory stores machine-readable instructions executable by the processor, and when the electronic device is in operation, the machine-readable instructions are executed by the processor to perform the electrode manufacturing method according to any one of claims 6 to 10.

15. A computer-readable storage medium, storing a computer program, wherein the computer program, when executed by a processor, is capable of performing the electrode manufacturing method according to any one of claims 6 to 10.
